# EUROPEAN PATENT APPLICATION

(11) **EP 4 682 663 A1**
(43) Date of publication of application: **21.01.2026**
(21) Application number: 25190034.6
(22) Date of filing: 16.07.2025
(51) Int. Cl.: G05D 1/81, A01B 69/04, G05D 105/15, G05D 107/20, G05D 109/10

(54) **AUTONOMOUS TRAVEL METHOD, AUTONOMOUS TRAVEL PROGRAM, AND AUTONOMOUS TRAVEL SYSTEM**

(30) Priority: 18.07.2024 JP 2024114562
(71) Applicant: Yanmar Holdings Co., Ltd., Osaka-shi, Osaka (JP)
(72) Inventor: NISHII, Yasuto, Okayama (JP); YAMAGUCHI, Yuji, Okayama (JP); MIYAKE, Koji, Okayama (JP)
(74) Representative: Sekiguchi, Kazuya

(57) **Abstract**

[Problem]

To provide an autonomous travel method, an autonomous travel program, and an autonomous travel system capable of improving the operability of a user operation on a work vehicle that autonomously travels.

[Solution]

The setting processing section 112 of the combine harvester 1 sets a travel mode to an autonomous travel mode or a manual travel mode, and maintains the autonomous travel mode when the combine harvester 1 set in the autonomous travel mode satisfies the autonomous travel maintaining condition.

## Description

### TECHNICAL FIELD

The present invention relates to a technique for causing a work vehicle to autonomously travel along a target route.

### BACKGROUND ART

Conventionally, there is known a system that causes a work vehicle to autonomously travel in a field along a target route that has been set in advance. For example, a system that improves work accuracy by stopping autonomous travel before a work vehicle deviates from a target route set in advance is known (see, for example, Patent Document 1).

### PRIOR ART DOCUMENT

### PATENT DOCUMENT

Patent Document 1: Japanese Patent No. 6253678

### SUMMARY OF INVENTION

### TECHNICAL PROBLEM

For example, when a work vehicle autonomously travels in an autonomous travel mode and then the autonomous travel is canceled, the work vehicle is switched from the autonomous travel mode to a manual travel mode, and an operator needs to perform a predetermined operation to resume the autonomous travel. When the autonomous travel is canceled without an operator's intention, the operator needs to perform an operation to resume the autonomous travel, and the operability is degraded. For example, when the operator who rides on the work vehicle stops the autonomously traveling work vehicle and gets out of the work vehicle, the autonomous travel mode is canceled, and when resuming the autonomous travel, the operator needs to perform a predetermined operation to satisfy a start condition of the autonomous travel.

An object of the present invention is to provide an autonomous travel method, an autonomous travel program, and an autonomous travel system capable of improving the operability of a user operation on an autonomously traveling work vehicle.

### SOLUTION TO PROBLEM

An autonomous travel method according to the present invention is a method for causing a work vehicle to autonomously travel along a target route. The autonomous travel method executes setting a travel mode of the work vehicle to an autonomous travel mode or a manual travel mode, and maintaining the autonomous travel mode when the work vehicle set in the autonomous travel mode satisfies an autonomous travel maintaining condition.

An autonomous travel program according to the present invention causes the work vehicle to autonomously travel along the target route. The autonomous travel program causes one or more processors to set a travel mode of the work vehicle to an autonomous travel mode or a manual travel mode, and maintain the autonomous travel mode when the work vehicle set in the autonomous travel mode satisfies an autonomous travel maintaining condition.

An autonomous travel system according to the present invention causes the work vehicle to autonomously travel along the target route. The autonomous travel system includes a setting processing section setting a travel mode of the work vehicle to an autonomous travel mode or a manual travel mode, and maintaining the autonomous travel mode when the work vehicle set in the autonomous travel mode satisfies an autonomous travel maintaining condition.

### ADVANTAGEOUS EFFECTS OF INVENTION

The present invention can provide an autonomous travel method, an autonomous travel program, and an autonomous travel system capable of improving the operability of a user operation on an autonomously traveling work vehicle.

### BRIEF DESCRIPTION OF DRAWINGS

FIG. 1 is a functional block diagram illustrating a configuration of a travel system according to an embodiment of the present invention.
FIG. 2 is an external view illustrating a configuration of a combine harvester according to the embodiment of the present invention.
FIG. 3 is a view illustrating an example of a target route set in a field according to the embodiment of the present invention.
FIG. 4 is a diagram illustrating an example of an operation screen displayed on an operation terminal according to the embodiment of the present invention.
FIG. 5 is a top view illustrating a steering section of the combine harvester according to the embodiment of the present invention.
FIG. 6 is a diagram illustrating an example of a travel method of the combine harvester according to the embodiment of the present invention.
FIG. 7 is a flowchart of an example of a procedure of an autonomous travel process executed by the travel system according to the embodiment of the present invention.

### DESCRIPTION OF EMBODIMENTS

The following embodiments are merely embodied examples of the present invention, and do not limit the technical scope of the present invention.

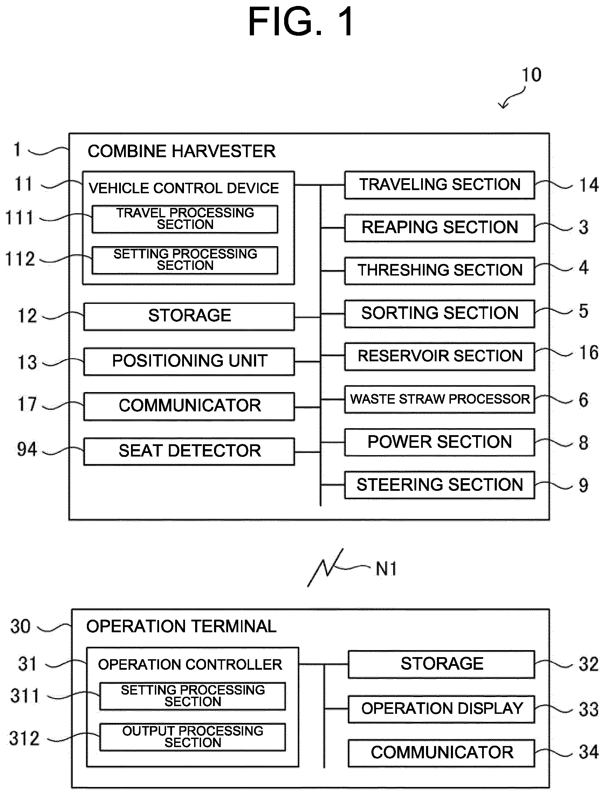

In this embodiment, a combine harvester 1 will be described as an example of a work vehicle of the present invention. Note that, as another embodiment, the work vehicle of the present invention may be a tractor, a rice transplanter, a construction machine, a snow blower, or the like. As illustrated in FIG. 1, an autonomous travel system 10 according to the embodiment of the present disclosure includes the combine harvester 1 and an operation terminal 30. The combine harvester 1 and the operation terminal 30 can communicate with each other via a communication network N1. For example, the combine harvester 1 and the operation terminal 30 can communicate via a mobile phone network, a packet network, or a wireless local area network (LAN).

The combine harvester 1 is a work vehicle that performs farm work (for example, harvest work), such as reaping, in a field. For example, the combine harvester 1 performs the reaping work of grain culms while traveling in the field, and transmits GNSS information of a GNSS antenna mounted on the combine harvester 1, that is, an own vehicle position of the combine harvester 1 as measurement point data to the operation terminal 30.

In addition, the combine harvester 1 can autonomously travel along a preset target route. Note that the combine harvester 1 may be configured to autonomously travel in partial areas of the field (for example, straight routes) and to manually travel in other areas of the field (for example, turning routes). The combine harvester 1 receives various types of setting information from the operation terminal 30 and autonomously travels in accordance with the setting information.

Furthermore, the combine harvester 1 performs, at a discharge place set in advance in the field, discharge work of discharging grains (harvested products) of reaped grain culms to a collection vehicle. The collection vehicle is placed alongside the discharge place outside the field, for example, and collects the grains discharged from the combine harvester 1 into a collector. The collection vehicle is a transport vehicle that transports collected grains to a predetermined place.

The operation terminal 30 is a portable terminal capable of remotely operating the combine harvester 1, and is composed of, for example, a tablet terminal, a laptop computer, a smart phone, or the like.

An operator (worker) can perform a setting operation for various setting items on the operation terminal 30. The operation terminal 30 displays information including a work state and a travel state of the combine harvester 1 during autonomous travel. Furthermore, the operation terminal 30 displays information including a discharge state during a grain discharge work. The operator can recognize a work state, a travel state, a discharge state, and the like on the operation terminal 30.

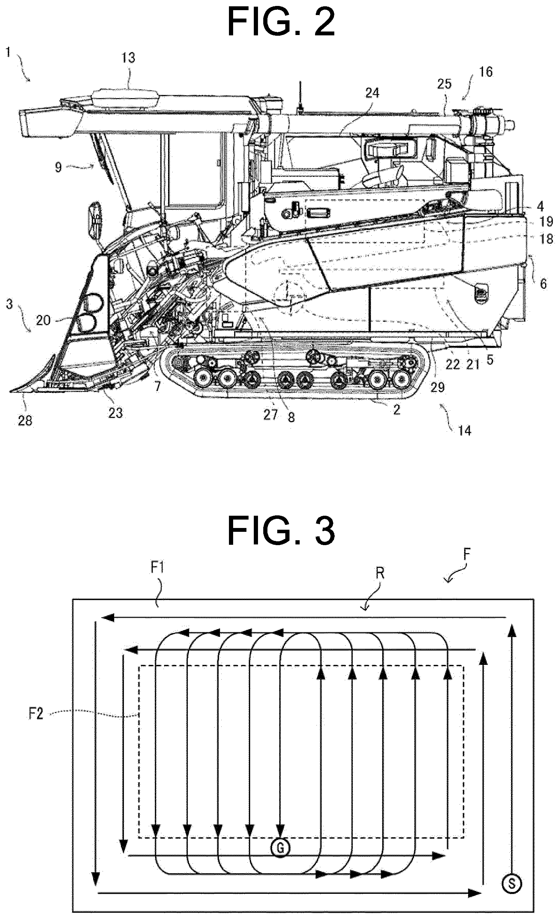

FIG. 3 is a view illustrating an example of a target route R set in a field F. For example, the combine harvester 1 performs a reaping work ("turning reaping" or "reciprocating reaping") while traveling from an outer peripheral side toward an inner peripheral side from a work start position S to a work end position G along the target route R in the field F. Specifically, in an outer peripheral region F1 on the outer peripheral side of the field F, the combine harvester 1 performs the reaping work while traveling along edges (outer periphery) of the field. In an inner peripheral region F2 on the inner peripheral side of the field F, the combine harvester 1 performs the reaping work while traveling straight on individual work routes in a vertical direction of FIG. 3 and moving between the work routes by turning and straight traveling without performing the reaping work in a lateral direction of FIG. 3.

Furthermore, when a storage amount of grains harvested during the reaping work has reached a predetermined amount (for example, an upper limit value), or when the reaping work is terminated (a work end position G has been reached), the combine harvester 1 moves to a predetermined discharge place in the field F and discharges the grains stored in a reservoir tank 24 (see FIG. 2) to the collection vehicle.

The combine harvester 1 performs the reaping work and the discharge work while autonomously traveling along the target route R in the field F as described above. The combine harvester 1 includes a travel mode (unmanned autonomous travel mode) in which the combine harvester 1 autonomously travels without an operator on board, a travel mode (manned autonomous travel mode) in which the combine harvester 1 autonomously travels while accepting an operation (a speed change operation, a position shift operation, or the like) of an operator on board, and a travel mode (manual travel mode) in which the combine harvester 1 travels (manually travels) in response to manual steering by the operator, and has a configuration capable of switching these travel modes.

### Operation Terminal 30

As illustrated in FIG. 1, the operation terminal 30 is an information processing device including an operation controller 31, a storage 32, an operation display 33, and a communicator 34. The operation terminal 30 is composed of, for example, a tablet terminal.

The communicator 34 is a communication interface that connects the operation terminal 30 to a communication network N1 in a wired manner or wireless manner so as to execute data communication in accordance with a predetermined communication protocol with external devices, such as one or more combine harvesters 1, via the communication network N1.

The operation display 33 is a user interface including a display, such as a liquid crystal display or an organic electroluminescence (EL) display, that displays various types of information, and an operation acceptor, such as a touch panel, a mouse, or a keyboard, that accepts operations. The operator can perform an operation of registering various types of setting information by operating the operation acceptor on a setting screen (not illustrated) displayed on the display. The operator can issue an autonomous travel instruction to the combine harvester 1 by operating the operation acceptor. Furthermore, the operator can recognize a travel state of the combine harvester 1 that autonomously travels in the field F using a traveling trajectory displayed on the operation terminal 30 at a location away from the combine harvester 1. The operator can recognize a discharge state displayed on the operation terminal 30 at a location away from the combine harvester 1.

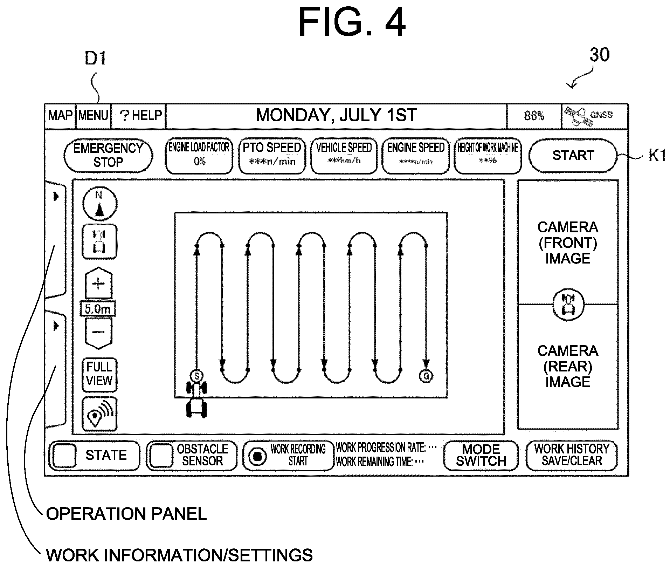

FIG. 4 is a diagram illustrating an example of an operation screen D1 displayed on the operation display 33. The operation screen D1 displays a map including a field to be worked and the target route R, a work state, a travel state, and a camera image. The operation screen D1 displays a start button K1 for accepting an autonomous travel start instruction issued by the operator. When the combine harvester 1 satisfies an autonomous travel start condition, the start button K1 is displayed in a selectable manner, and when the operator presses the start button K1, the operation terminal 30 outputs an autonomous travel start instruction to the combine harvester 1. Note that, when the combine harvester 1 does not satisfy the autonomous travel start condition, a "State" field of the operation screen D1 is turned on (for example, red lighting).

The storage 32 is a non-volatile storage, such as a hard disk drive (HDD), a solid state drive (SSD), or a flash memory, that stores various types of information. The storage 32 stores a control program for causing the operation controller 31 to execute a predetermined control process. For example, the control program is non-temporarily recorded in a computer-readable recording medium, such as a flash read-only memory (ROM), an electrically erasable programmable read-only memory (EEPROM), a compact disc (CD), or a digital versatile disc (DVD), read by a predetermined reading device (not illustrated) included in the operation terminal 30, and stored in the storage 32. Note that the control program may be downloaded from a server (not illustrated) to the operation terminal 30 via the communication network N1 and stored in the storage 32. The storage 32 may also store work information transmitted from the combine harvester 1.

In addition, the storage 32 includes a dedicated application installed for enabling the autonomous travel of the combine harvester 1. The operation controller 31 activates the dedicated application to execute a setting process of various types setting information about the combine harvester 1, and issues an autonomous travel instruction to the combine harvester 1, and the like.

The operation controller 31 includes control devices, such as a central processing unit (CPU), a read-only memory (ROM), and a random access memory (RAM). The CPU is a processor that executes various types of arithmetic processing. The ROM is a non-volatile storage that stores in advance control programs, such as a BIOS and an OS, for causing the CPU to execute various types of arithmetic processing. The RAM is a volatile or non-volatile storage that stores various types of information and is used as a temporary storage memory for the various types of processing executed by the CPU. The operation controller 31 controls the operation terminal 30 with the CPU executing various control programs stored in advance in the ROM or the storage 32.

As illustrated in FIG. 1, the operation controller 31 includes various processing sections, such as a setting processing section 311 and an output processing section 312. Note that the operation controller 31 functions as the various processors by causing the CPU to execute various types of processing according to the control program. Some or all of the processors may be composed of an electronic circuit. The control program may cause a plurality of processors to function as the processing sections described above.

The setting processing section 311 sets various types of setting information for the combine harvester 1 to perform autonomous travel. Specifically, the setting processing section 311 sets field information about the field. The field information includes, for example, a shape, a size, and position information (coordinates and the like) of an outermost periphery of the field, measurement point data constituting the outermost periphery of the field, and a shape, a size, and position information (coordinates and the like) of a work area in the field for performing work in the field. Furthermore, the field information includes an address of the field, a registration name and a registration date of the field information, and a registration name and a registration date of the work area in the field. The setting processing section 311 receives a registration operation of the field information performed by the operator and sets the field information.

Furthermore, the setting processing section 311 creates the target route R including the work routes and the turning routes. For example, the operator selects a route pattern, a turning type, and the like on a setting screen (not illustrated). The route pattern includes "reciprocating reaping" in which a plurality of strokes are reciprocated and "turning reaping" in which the turning of the strokes along the inner periphery of the work area in the field is repeated while the turning is shifted to the center side, and the operator selects any one of the route patterns. The operator can correct, on the setting screen, a turning radius for turning in works of the reciprocating reaping and the turning reaping.

**In** addition, the setting processing section 311 creates work routes based on the information, such as the field information, the route pattern, the turning type, and the turning radius. The setting processing section 311 registers information on the created work routes (target route R) after associating the information with the field F.

Furthermore, the setting processing section 311 also sets work information regarding works to be performed by the combine harvester 1. The work information includes information on a reaping work and information on an intermediate work performed by the combine harvester 1 at a predetermined position during the reaping work. For example, when a storage amount of a reservoir tank 24 (see FIG. 2) reaches a predetermined amount during the reaping work, the combine harvester 1 moves to a discharge place in the field F and discharges grains stored in the reservoir tank 24 to a collection vehicle. For example, when a fuel reaches a predetermined amount (for example, a lower limit value) during the reaping work, the combine harvester 1 moves to a replenishment place in the field F and replenishes the fuel. The setting processing section 311 sets the discharge place and the replenishment place at arbitrary locations in the field F in accordance with a setting operation of the operator. The work information includes information on an upper limit value of the storage amount, the discharge place, the lower limit value of the fuel, and the replenishment place. When setting the discharge place, the setting processing section 311 may create a route from the work end position G to the discharge place.

The setting processing section 311 further sets a travel speed (vehicle speed) of the combine harvester 1. For example, the operator can set, on the setting screen, a straight-traveling vehicle speed, a turning vehicle speed, and a backward vehicle speed during work and during non-work.

The setting processing section 311 further sets a travel mode of the combine harvester 1. For example, the operator can select the autonomous travel mode (an unmanned autonomous travel mode or a manned autonomous travel mode) or the manual travel mode on the setting screen.

**In** addition to the above-described information, the setting processing section 311 sets known information, such as a type of the combine harvester 1 (the maximum number of rows to be reaped), a vehicle width, and a vehicle length.

The output processing section 312 outputs various types of setting information set by the setting processing section 311 to the combine harvester 1. The output processing section 312 outputs a work start instruction (autonomous travel start instruction) and a work end instruction (autonomous travel end instruction) to the combine harvester 1 in accordance with an operation of the operator.

When an autonomous travel start operation (an operation of selecting the start button K1) performed by the operator is accepted on the operation screen D1, the output processing section 312 outputs the autonomous travel start instruction to the combine harvester 1. Note that, when the combine harvester 1 satisfies the autonomous travel condition, the operation controller 31 permits the acceptance of the autonomous travel start operation performed by the operator. When the combine harvester 1 does not satisfy the autonomous travel condition, the operation controller 31 prohibits the acceptance of the autonomous travel start operation performed by the operator.

When acquiring an autonomous travel start instruction from the operation terminal 30, the vehicle control device 11 of the combine harvester 1 causes the combine harvester 1 to start work and autonomous travel. Furthermore, when the operation controller 31 receives an autonomous travel stop operation (such as an operation of selecting an emergency stop button on the operation screen D1) performed by the operator, the output processing section 312 outputs an autonomous travel stop instruction to the combine harvester 1. When acquiring the autonomous travel stop instruction from the operation terminal 30, the vehicle control device 11 of the combine harvester 1 stops the work and the autonomous travel of the combine harvester 1.

Note that the operation terminal 30 may be accessible to a website of an agricultural support service (agricultural support site) provided by a server (not illustrated) via the communication network N1. In this case, the operation controller 31 executes a browser program, allowing the operation terminal 30 to function as an operating terminal of the server. The server includes the above-described processing sections and executes the individual processes.

### Combine Harvester 1

FIG. 2 is an external view illustrating the combine harvester 1 as viewed from the side. As illustrated in FIGS. 1 and 2, the combine harvester 1 includes a traveling section 14, a reaping section 3, a threshing section 4, a sorting section 5, a reservoir section 16, a waste straw processor 6, a power section 8, a steering section 9, a vehicle control device 11, a storage 12, a positioning unit 13, a communicator 17, and a seat detector 94. While traveling using the traveling section 14, the combine harvester 1 threshes, by the threshing section 4, grain culms reaped by the reaping section 3, sorts grains by the sorting section 5, and accumulates the grains in the reservoir section 16. The combine harvester 1 processes waste straws after the threshing by the waste straw processor 6. The combine harvester 1 uses power supplied from the power section 8 to drive the traveling section 14, the reaping section 3, the threshing section 4, the sorting section 5, the reservoir section 16, and the waste straw processor 6.

The traveling section 14 is provided below a machine body frame 29, and includes a pair of right and left crawler-type traveling devices 2 and a transmission (not shown). The traveling section 14 causes the combine harvester 1 to travel in a forward-and-backward direction or to turn to a right-and-left direction by rotating crawlers of the crawler-type traveling devices 2 by power (e.g., rotation power) transmitted from an engine 27 of the power section 8. The transmission transmits the power (rotation power) of the power section 8 to the crawler-type traveling devices 2 and can also change a speed of the rotation power.

The reaping section 3 is disposed in front of the traveling section 14, and perform a reaping work for rows within the number of reaping available rows. The reaping section 3 includes a divider 28, a raising device 20, a cutting device 23, and a conveyance device 7. The reaping section 3 is movable (movable up and down) between a work position (work height) and a non-work position (non-work height). The reaping section 3 is an example of a work machine of the present invention.

The divider 28 divides grain culms in the field for each row and guides to the raising device 20 a predetermined number of grain culms for rows within the number of reaping available rows. The raising device 20 raises the grain culms that are guided by the divider 28. The cutting device 23 cuts the grain culms raised by the raising device 20. The conveyance device 7 conveys the grain culms cut by the cutting device 23 to the threshing section 4.

The threshing section 4 is disposed behind the reaping section 3. The threshing section 4 includes a feed chain 18 and a threshing cylinder 19. The feed chain 18 conveys the grain culms conveyed by the conveyance device 7 of the reaping section 3 for threshing, and further conveys the threshed grain culms, that is, waste straws to the waste straw processor 6. The threshing cylinder 19 threshes the grain culms conveyed by the feed chain 18.

The sorting section 5 is disposed below the threshing section 4. The sorting section 5 includes a swing sorting device 21, an air blow sorting device 22, a grain conveyance device (not shown), and a waste straw discharge device (not shown). The swing sorting device 21 sifts the threshed grain that falls from the threshing section 4 and sorts the threshed grains into grains, straw wastes, etc.

The air blow sorting device 22 further sorts the threshed grains sorted by the swing sorting device 21 into grains, straw wastes, etc., by air blow. The grain conveyance device conveys to the reservoir section 16 grains sorted by the swing sorting device 21 and the air blow sorting device 22. The waste straw discharge device discharges the straw wastes and the like sorted by the swing sorting device 21 and the air blow sorting device 22 to the outside of the machine.

The reservoir section 16 is disposed on the right side of the threshing section 4. The reservoir section 16 includes a reservoir tank (grain tank) 24 and a discharge device 25. The reservoir tank 24 reserves the grains conveyed from the sorting section 5.

The discharge device 25 performs a work of discharging grains that are harvested products. Specifically, the discharge device 25 discharges the grains stored in the reservoir tank 24 to a collection vehicle at a discharge place set in advance.

The waste straw processor 6 is disposed behind the threshing section 4. The waste straw processor 6 includes a waste straw conveyance device (not shown) and a waste straw cutting device (not shown). The waste straw conveyance device conveys the waste straws conveyed from the feed chain 18 of the threshing section 4 to the waste straw cutting device. The waste straw cutting device cuts the waste straws conveyed by the waste straw conveyance device, and discharges the cut waste straws to the outside of the machine. The waste straw processor 6 discharges the waste straws of the reaped grain culms to positions of the grain culms of reaping targets.

The power section 8 is disposed above the traveling section 14 and in front of the reservoir section 16. The power section 8 includes the engine 27 which generates rotation power. The power section 8 transmits rotation power generated by the engine 27 to the traveling section 14, the reaping section 3, the threshing section 4, the sorting section 5, the reservoir section 16, and the waste straw processor 6.

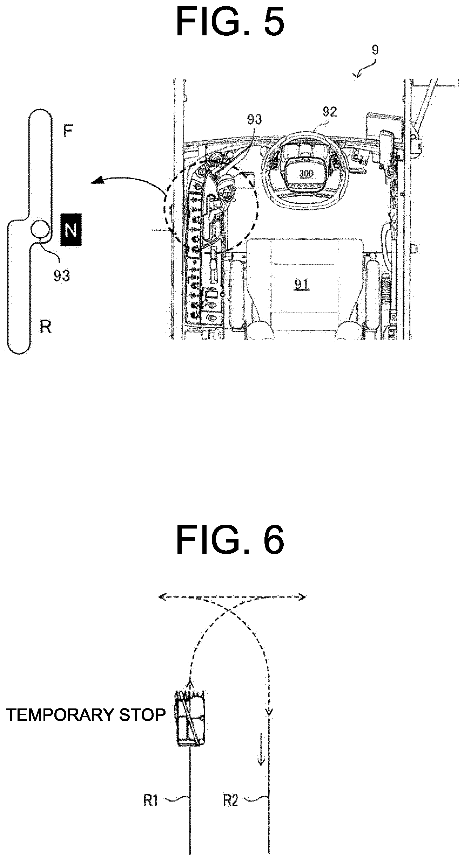

The steering section 9 is disposed above the power section 8. As illustrated in FIG. 5, the steering section 9 includes, around a driver's seat 91 that is a seat on which the operator sits, a steering wheel 92 for issuing an instruction to turn the machine body of the combine harvester 1, a main shift lever 93 and an auxiliary shift lever for issuing an instruction to change a speed of forward and backward movements of the combine harvester 1 as operation tools for steering travel of the combine harvester 1. Manual travel of the combine harvester 1 is executed by the traveling section 14 that has received an operation of the steering wheel 92, the main shift lever 93, and the auxiliary shift lever of the steering section 9. The steering section 9 includes a mechanism for operating a reaping work by the reaping section 3, a threshing work by the threshing section 4, a discharge work by the discharge device 25 of the reservoir section 16, and other work.

The main shift lever 93 can start and stop the combine harvester 1, switch a travel direction (forward or backward), and change a vehicle speed (accelerate or decelerate) depending on a position of the main shift lever 93. For example, as illustrated in FIG. 5, the main shift lever 93 can be shifted between a front position "F" and a rear position "R". When the main shift lever 93 is shifted toward the front position "F", the combine harvester 1 can travel forward, and when the main shift lever 93 is shifted toward the rear position "R", the combine harvester 1 can travel backward. A vehicle speed of the forward travel can be increased as the main shift lever 93 is shifted toward the front position "F", and a vehicle speed of the backward travel can be increased as the main shift lever 93 is shifted toward the rear position "R" side. When the main shift lever 93 is set to the front position "F" (front end position), the vehicle speed during a forward movement becomes the maximum vehicle speed, and when the main shift lever 93 is set to the rear position "R" (rear end position), the vehicle speed during a backward movement becomes the maximum vehicle speed. The vehicle speed can be decelerated as the main shift lever 93 is brought closer to a neutral position "N" (neutral), and when the main shift lever 93 is set to the neutral position "N", the vehicle speed becomes 0 and the combine harvester 1 stops (vehicle stop).

The positioning unit 13 acquires an own vehicle position using of the combine harvester 1 using a satellite positioning system, such as GPS. For example, the positioning unit 13 receives a positioning signal from a positioning satellite via a positioning antenna, and acquires position information of the positioning unit 13, i.e., the own vehicle position (measurement point data) of the combine harvester 1 based on the positioning signal. The positioning unit 13 may be composed of a quantum compass instead of the positioning antenna.

The communicator 17 (see FIG. 1) is a communication interface that connects the combine harvester 1 to the communication network N1 in a wired or wireless manner, and conducts data communication with an external device, such as the operation terminal 30 via the communication network N1 in accordance with a predetermined communication protocol.

The seat detector 94 is configured by, for example, a switch, a sensor, and the like, and detects that the operator has been seated in the driver's seat 91 or has left the driver's seat 91. The seat detector 94 outputs an ON-signal to the vehicle control device 11 when the operator is seated in the driver's seat 91, and outputs an OFF-signal to the vehicle control device 11 when the operator has left the driver's seat 91.

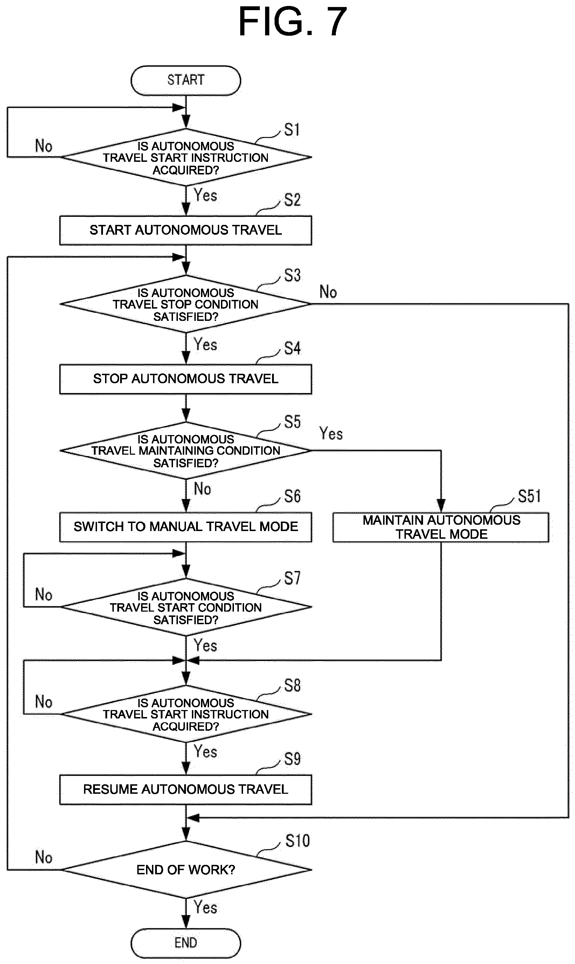

The storage 12 is a non-volatile storage, such as an HDD, an SSD, or a flash memory, which stores various types of information. The storage 12 stores control programs including an autonomous travel program for causing the vehicle control device 11 to execute an autonomous travel process described below (see FIG. 7). For example, the autonomous travel program is non-temporarily recorded on a computer-readable recording medium, such as a flash ROM, an EEPROM, a CD, or a DVD, and is read by a predetermined reading device (not shown) and stored in the storage 12. Note that the autonomous travel program may be downloaded from a server (not shown) via the communication network N1 to the combine harvester 1 and stored in the storage 12. The storage 12 also stores various types of setting information acquired from the operation terminal 30. The autonomous travel program includes the autonomous travel program of the present invention.

The vehicle control device 11 has control devices, such as a CPU, a ROM, and a RAM. The CPU is a processor that executes various types of arithmetic processing. The ROM is a non-volatile storage that stores in advance control programs, such as a BIOS and an OS, for causing the CPU to execute various types of arithmetic processing. The RAM is a volatile or non-volatile storage that stores various types of information and is used as a temporary storage memory for the various types of processing executed by the CPU. The vehicle control device 11 controls the combine harvester 1 by causing the CPU to execute various types of control program stored in advance in the ROM or the storage 12.

In the related art, for example, when the autonomous travel is canceled while the combine harvester 1 autonomously travels in the autonomous travel mode, the operator needs to perform a predetermined operation to switch from the autonomous travel mode to the manual travel mode to resume the autonomous travel. When the autonomous travel is canceled without an operator's intention, the operator needs to perform an operation to resume the autonomous travel, and the operability is degraded. For example, when the operator who has boarded the combine harvester 1 stops the combine harvester 1 during the autonomous travel and gets out of the combine harvester 1, the autonomous travel mode is canceled, and when the autonomous travel is to be resumed, the operator needs to perform a predetermined operation to satisfy the start condition of the autonomous travel.

For example, as illustrated in FIG. 6, when the combine harvester 1 has finished reaping work in a work route R1, the operator sometimes sets the main shift lever 93 to the neutral position "N" (neutral position) to stop the combine harvester 1 and leave the driver's seat 91 at the terminal end of the work route R1 in order to remove residues, such as waste straws and weeds. In this case, when a predetermined period of time has elapsed after the operator has left the driver's seat 91, the combine harvester 1 cancels the autonomous travel mode and switches to the manual travel mode. When the travel mode is switched to the manual travel mode, the autonomous travel start condition needs to be satisfied when the autonomous travel of the combine harvester 1 is to be resumed. When a start of the autonomous travel from any one of the turning routes is not permitted, in the example illustrated in FIG. 6, the autonomous travel of the combine harvester 1 may not be started, and the operator needs to move the combine harvester 1 to a next work route R2 by manual steering, resulting in a deterioration in operability.

In contrast, the combine harvester 1 according to this embodiment has a configuration capable of improving the operability of the user operation on the combine harvester 1 that autonomously travels, as described below.

Specifically, as illustrated in FIG. 1, the vehicle control device 11 includes the various processing sections, such as the travel processing section 111 and the setting processing section 112. Note that the vehicle control device 11 functions as the various processing sections by causing the CPU to execute various types of processing in accordance with the autonomous travel program. Some or all of the processing sections may be composed of an electronic circuit. Note that the autonomous travel program may cause a plurality of processors to function as the processing sections.

The travel processing section 111 executes a travel process for causing the combine harvester 1 to travel. Specifically, the travel processing section 111 causes the combine harvester 1 to autonomously travel along the target route R set in the field F. The travel processing section 111 causes the combine harvester 1 to autonomously travel along the plurality of work routes that are included in the target route R and along which the combine harvester 1 is caused to perform predetermined work (reaping work), and the movement routes (such as the turning routes) that connect the plurality of work routes. The travel processing section 111 acquires various types of setting information set for the field F from the operation terminal 30. Furthermore, in the reaping work, the travel processing section 111 acquires an own position of the combine harvester 1 from the positioning unit 13, and controls the traveling section 14, the reaping section 3, and the power section 8 so as to cause the combine harvester 1 to perform the autonomous travel and the reaping work along the work routes based on the own vehicle position and the work routes included in the target route R.

For example, as illustrated in FIG. 3, the travel processing section 111 causes the combine harvester 1 to perform the autonomous travel and the reaping work along the outer periphery in the outer peripheral region F1 from the work start position S and then perform the autonomous travel and the reaping work to the work end position G in the inner peripheral region F2.

Furthermore, when a storage amount of the reservoir tank 24 reaches a predetermined amount during the reaping work, the travel processing section 111 lifts the reaping section 3 to the non-work position to stop the reaping work, and causes the combine harvester 1 to travel on a discharge movement route from a current position (work interruption position) to the discharge place. When the reaping work is finished (reaches the work end position G), the travel processing section 111 lifts the reaping section 3 to the non-work position to stop the reaping work, and causes the combine harvester 1 to travel on the discharge movement route from the work end position G to the discharge place.

The setting processing section 112 sets and switches the travel mode. Specifically, when acquiring selection information of the travel mode (the autonomous travel mode or the manual travel mode) selected by the operator on the operation terminal 30, the setting processing section 112 sets the selected travel mode. In a case where the setting processing section 112 sets the autonomous travel mode, the travel processing section 111 permits the autonomous travel when the combine harvester 1 satisfies the autonomous travel start condition. For example, the travel processing section 111 permits the autonomous travel when the position of the combine harvester 1 is within a predetermined distance from the work start position S and orientation of the combine harvester 1 is within a predetermined angle with respect to orientation of one of the work routes. Specifically, the travel processing section 111 permits the autonomous travel when states of a brake, a shift lever, a steering, and the like in addition to the position and the orientation of the combine harvester 1 satisfy the autonomous travel start conditions.

After the autonomous travel of the combine harvester 1 is started, the travel processing section 111 continues the autonomous travel while the autonomous travel stop condition is not satisfied. On the other hand, when the autonomous travel stop condition is satisfied after the autonomous travel of the combine harvester 1 is started, the travel processing section 111 stops the autonomous travel. For example, when the operator operates an operation acceptor for temporary stop (each operation lever (the main shift lever 93 or the like), an operation switch, an operation button, or the like), when the positioning accuracy of the combine harvester 1 becomes less than predetermined accuracy, when the combine harvester 1 detects an obstacle, when an operation of setting the reaping section 3 to a non-work position is received from the operator, when the operator leaves the driver's seat 91, when the operator performs a steering operation, when a failure in communication with the operation terminal 30 occurs, when the operator performs an emergency stop operation on the operation terminal 30, or when a failure of the combine harvester 1 (malfunction of the machine) occurs, the travel processing section 111 determines that the autonomous travel stop condition is satisfied, and stops the autonomous travel to stop the combine harvester 1.

Here, in the related art, as described above, when the combine harvester 1 is stopped and the autonomous travel mode is canceled, an operation, such as manual steering, is required to resume the autonomous travel.

In contrast, in this embodiment, the setting processing section 112 is configured to maintain the autonomous travel mode when the combine harvester 1 set in the autonomous travel mode satisfies the autonomous travel maintaining condition. Furthermore, the setting processing section 112 has a configuration of switching the travel mode to the manual travel mode when the combine harvester 1 set in the autonomous travel mode does not satisfy the autonomous travel maintaining condition. Specific examples (first to seventh examples) of maintaining the autonomous travel mode will be described below. The following first to seventh examples are not limited to the combine harvester 1, and may be applied to other work vehicles, such as a tractor and a rice transplanter.

### First Example

In the autonomous travel system 10 according to the first example, the setting processing section 112 maintains the autonomous travel mode when the autonomous travel of the combine harvester 1 is stopped by an operation of the operation acceptor that temporarily stops the autonomous travel. That is, "the autonomous travel of the combine harvester 1 is stopped by an operation of the operation acceptor that temporarily stops the autonomous travel" is an example of the autonomous travel maintaining condition of the present invention.

Specifically, the setting processing section 112 maintains the autonomous travel mode when the autonomous travel is stopped by setting the main shift lever 93 to the neutral position "N" (refer to FIG. 5).

For example, when the operator sets the main shift lever 93 to the neutral position "N" while the combine harvester 1 autonomously travels in the autonomous travel mode, the travel processing section 111 decelerates and stops the combine harvester 1. When the main shift lever 93 is set to the neutral position "N" and the combine harvester 1 enters a vehicle stop state, the setting processing section 112 determines that the autonomous travel maintaining condition is satisfied and maintains the autonomous travel mode. Therefore, for example, even when the operator gets out of the combine harvester 1 (or when a predetermined period of time has elapsed after the operator leaves the driver's seat 91) after the combine harvester 1 is stopped, the setting processing section 112 maintains the autonomous travel mode without canceling the autonomous travel mode due to the operator leaving the driver's seat 91. When a predetermined condition is satisfied while the operator is away from the driver's seat 91, the setting processing section 112 may cancel the autonomous travel mode and switch the travel mode to the manual travel mode. The setting processing section 112 may immediately cancel the autonomous travel mode and switch to the manual travel mode when the predetermined condition is satisfied, or may maintain the autonomous travel mode until the operator is seated in the driver's seat 91 and cancel the autonomous travel mode and switch to the manual travel mode when it is detected that the operator is seated in the driver's seat 91. Furthermore, the cancellation factor (the predetermined condition) of the autonomous travel mode may be displayed. For example, when the autonomous travel mode is immediately switched to the manual travel mode, the display of the cancellation factor may be maintained until the operator is seated in the driver's seat 91.

With the above configuration, since the travel mode is maintained in the autonomous travel mode even in a state where the autonomous travel is stopped, for example, even when the autonomous travel is started (resumed) in a position where a start of the autonomous travel is restricted (the turning routes illustrated in FIG. 6), the autonomous travel can be resumed by the autonomous travel start operation (an operation of selecting the start button K1 in FIG. 4) of the operator.

The operation acceptor that temporarily stops the autonomous travel is not limited to the main shift lever 93. As another embodiment, the operation acceptor may be an operation lever or an operation switch mounted on the combine harvester 1, or an operation button arranged (displayed) on the operation terminal 30. The setting processing section 112 may maintain the autonomous travel mode when the combine harvester 1 is changed to the vehicle stop state by a temporary stop operation performed on the operation acceptors.

Thus, the vehicle control device 11 stops the autonomous travel when the combine harvester 1 that is autonomously traveling in the autonomous travel mode satisfies the autonomous travel stop condition, and permits the resumption of the autonomous travel when the combine harvester 1 satisfies the autonomous travel maintaining condition.

### Second Example

In the autonomous travel system 10 according to the second example, the setting processing section 112 maintains the autonomous travel mode when the autonomous travel is stopped due to positioning accuracy becoming less than predetermined accuracy in the combine harvester 1. That is, "the autonomous travel is stopped due to positioning accuracy becoming less than predetermined accuracy" is an example of the autonomous travel maintaining condition of the present invention.

Specifically, the setting processing section 112 maintains the autonomous travel mode when the autonomous travel is stopped due to the positioning accuracy of the combine harvester 1 becoming less than the predetermined accuracy.

For example, when the positioning accuracy is deteriorated to less than the predetermined accuracy in the combine harvester 1 that autonomously travels in the autonomous travel mode, the travel processing section 111 stops the combine harvester 1. When the combine harvester 1 enters a stopped state due to the deterioration in the positioning accuracy, the setting processing section 112 determines that the autonomous travel maintaining condition is satisfied and maintains the autonomous travel mode. Thus, as in the first example, even when the autonomous travel is started (resumed) in a position where the start of the autonomous travel is restricted (the turning routes illustrated in FIG. 6), the autonomous travel can be resumed by the autonomous travel start operation of the operator.

Note that, when the positioning accuracy has not recovered to the predetermined accuracy or more at the time of resuming the autonomous travel, the vehicle control device 11 may notify the operator of a warning.

As another embodiment, the setting processing section 112 may be configured to maintain the autonomous travel mode when the positioning accuracy becomes less than the predetermined accuracy while the combine harvester 1 is stopped in the autonomous travel mode, and switch the travel mode to the manual travel mode when the positioning accuracy becomes less than the predetermined accuracy while the combine harvester 1 autonomously travels in the autonomous travel mode. That is, "the autonomous travel is stopped due to positioning accuracy becoming less than predetermined accuracy" in the second example is an example of the autonomous travel maintaining condition of the present invention.

### Third Example

In the autonomous travel system 10 according to the third example, the setting processing section 112 maintains the autonomous travel mode when the autonomous travel is stopped due to detection of an obstacle by the combine harvester 1.

That is, "the autonomous travel is stopped due to detection of an obstacle" is an example of the autonomous travel maintaining condition of the present invention.

For example, when the combine harvester 1 that autonomously travels in the autonomous travel mode detects an obstacle, the travel processing section 111 stops the combine harvester 1. When the combine harvester 1 is brought into a stopped state by detecting an obstacle, the setting processing section 112 maintains the autonomous travel mode. Thus, as in the first example, even when the autonomous travel is started (resumed) in a position where the start of the autonomous travel is restricted (the turning routes illustrated in FIG. 6), the autonomous travel can be resumed by the autonomous travel start operation performed by the operator.

Note that the setting processing section 112 may determine whether to maintain the autonomous travel mode or to switch to the manual travel mode in accordance with a type of the obstacle. For example, when the combine harvester 1 detects a movable object (material or the like) and stops the autonomous travel, the setting processing section 112 maintains the travel mode in the autonomous travel mode. On the other hand, when the combine harvester 1 detects a person or an immovable object (structure or the like) and stops the autonomous travel, the setting processing section 112 switches the travel mode to the manual travel mode.

### Fourth Example

In the autonomous travel system 10 according to the fourth example, the setting processing section 112 switches the combine harvester 1 to the manual travel mode when receiving an operation to set the reaping section 3 (work machine) to a non-work position while the combine harvester 1 autonomously travels in the autonomous travel mode, and maintains the autonomous travel mode when receiving an operation to set the reaping section 3 to the non-work position while the combine harvester 1 is stopped in the autonomous travel mode. That is, "receiving an operation to set the reaping section 3 to the non-work position while the combine harvester 1 is stopped in the autonomous travel mode" is an example of the autonomous travel maintaining condition of the present invention.

For example, when the operator performs an operation of setting the reaping section 3 to the non-work position while the combine harvester 1 autonomously travels in the autonomous travel mode and performs a reaping work, the travel processing section 111 stops the combine harvester 1, and the setting processing section 112 switches the autonomous travel mode to the manual travel mode.

In contrast, when the operator performs the operation of setting the reaping section 3 to the non-work position while the combine harvester 1 is stopped in the autonomous travel mode, the setting processing section 112 maintains the autonomous travel mode. Thus, for example, in the example illustrated in FIG. 6, when the operator lifts the reaping section 3 to the non-work position after the combine harvester 1 has finished the reaping work at the work route R1 and stopped at a terminal end, the autonomous travel mode is maintained, and thus the operator can cause the combine harvester 1 to autonomously travel on one of the turning routes from the terminal end of the work route R1.

### Fifth Example

**In** the autonomous travel system 10 according to the fifth example, the setting processing section 112 switches the travel mode to the manual travel mode when the operator leaves the driver's seat 91 while the combine harvester 1 autonomously travels in the autonomous travel mode, and maintains the autonomous travel mode when the operator leaves the driver's seat 91 while the combine harvester 1 is stopped in the autonomous travel mode. That is, "the operator leaves the driver's seat 91 while the combine harvester 1 is stopped in the autonomous travel mode" is an example of the autonomous travel maintaining condition of the present invention.

For example, the setting processing section 112 performs a notification by a warning sound when the operator leaves the driver's seat 91 while the combine harvester 1 autonomously travels, and stops the combine harvester 1 and switches the travel mode to the manual travel mode at a time point when a predetermined period of time (for example, 5 seconds) has elapsed.

In contrast, when the operator leaves the driver's seat 91 while the combine harvester 1 is stopped in the autonomous travel mode, the setting processing section 112 maintains the autonomous travel mode even when a predetermined period of time has elapsed since the operator left the driver's seat 91.

Thus, since the travel mode is maintained in the autonomous travel mode, similarly to the first example, even when the position where the autonomous travel is started (resumed) is on one of the turning routes illustrated in FIG. 6, the autonomous travel can be resumed by the operator sitting in the driver's seat 91 and performing the autonomous travel start operation.

### Sixth Example

In the autonomous travel system 10 according to the sixth example, the setting processing section 112 switches the travel mode to the manual travel mode when a steering operation on the steering section is received while the combine harvester 1 autonomously travels in the autonomous travel mode, and maintains the autonomous travel mode when a steering operation on the steering section is received while the combine harvester 1 is stopped in the autonomous travel mode. That is, "a steering operation on the steering section is received while the combine harvester 1 is stopped in the autonomous travel mode" is an example of the autonomous travel maintaining condition of the present invention.

For example, when the operator performs an operation (steering operation) of the steering wheel 92 (an example of a steering section) while the combine harvester 1 autonomously travels in the autonomous travel mode and performs the reaping work, the travel processing section 111 stops the combine harvester 1, and the setting processing section 112 switches the autonomous travel mode to the manual travel mode. As another embodiment, when the operator operates the steering wheel 92, the setting processing section 112 may switch the autonomous travel mode to the manual travel mode in a state where the combine harvester 1 travels.

On the other hand, when the operator performs the steering operation while the combine harvester 1 is stopped in the autonomous travel mode, the setting processing section 112 maintains the autonomous travel mode. Thus, since the travel mode is maintained in the autonomous travel mode, similarly to the first example, even when a position where the autonomous travel is started (resumed) is one of the turning routes illustrated in FIG. 6, the autonomous travel can be resumed by performing the autonomous travel start operation.

### Seventh Example

In the autonomous travel system 10 according to the seventh example, the setting processing section 112 switches the travel mode to the manual travel mode when a communication state between the combine harvester 1 and the operation terminal 30 is deteriorated to a predetermined state while the combine harvester 1 autonomously travels in the autonomous travel mode, and maintains the autonomous travel mode when the communication state between the combine harvester 1 and the operation terminal 30 is deteriorated to the predetermined state while the combine harvester 1 is stopped in the autonomous travel mode. That is, "the communication state between the combine harvester 1 and the operation terminal 30 is deteriorated to the predetermined state while the combine harvester 1 is stopped in the autonomous travel mode" is an example of the autonomous travel maintaining condition of the present invention.

For example, when a communication failure occurs (for example, communication is disconnected) between the combine harvester 1 and the operation terminal 30 while the combine harvester 1 autonomously travels in the autonomous travel mode and performs the reaping work, the travel processing section 111 stops the combine harvester 1, and the setting processing section 112 switches the autonomous travel mode to the manual travel mode.

In contrast, when a communication failure occurs (communication is disconnected) between the combine harvester 1 and the operation terminal 30 while the combine harvester 1 is stopped in the autonomous travel mode, the travel processing section 111 maintains the autonomous travel mode. Thus, since the travel mode is maintained in the autonomous travel mode, for example, when the communication between the combine harvester 1 and the operation terminal 30 returns to the normal state, the autonomous travel can be resumed by performing the autonomous travel start operation even when the position at which the autonomous travel is started (resumed) is one of the turning routes illustrated in FIG. 6. When the communication between the combine harvester 1 and the operation terminal 30 has not returned to the normal state at the time of starting (resuming) the autonomous travel, the operator may be notified of warning information.

As described above, the vehicle control device 11 is configured to maintain the autonomous travel mode when the combine harvester 1 set in the autonomous travel mode satisfies the autonomous travel maintaining condition (the first to seventh examples). Furthermore, the setting processing section 112 has a configuration of switching the travel mode to the manual travel mode when the combine harvester 1 set in the autonomous travel mode does not satisfy the autonomous travel maintaining condition. Moreover, the vehicle control device 11 is configured to stop the autonomous travel when the combine harvester 1 autonomously traveling in the autonomous travel mode satisfies the autonomous travel stop condition, and to permit the resumption of the autonomous travel when the combine harvester 1 satisfies the autonomous travel maintaining condition. The vehicle control device 11 is configured to, when the combine harvester 1 that has stopped the autonomous travel satisfies the autonomous travel maintaining condition, permit the resumption of the autonomous travel when the positioning accuracy of the combine harvester 1 is equal to or more than the predetermined accuracy and notify the operator of warning information when the positioning accuracy of the combine harvester 1 is less than the predetermined accuracy.

### Autonomous Travel Process

An example of the autonomous travel process executed by the autonomous travel system 10 will be described hereinafter with reference to FIG. 7.

Note that the present invention can be interpreted as an invention of an autonomous travel method executing one or more steps involved in the autonomous travel process. In addition, one or more steps involved in the autonomous travel process described herein may be appropriately omitted. Furthermore, each step in the aforementioned autonomous travel process may be executed in a different order as long as the same functional effect is obtained. Furthermore, although the case where the vehicle control device 11 of the combine harvester 1 executes each step in the autonomous travel process will be described as an example here, an autonomous travel method in which one or more processors execute each step in the autonomous travel process in a distributed manner is also conceivable as another embodiment.

Here, it is assumed that the travel mode of the combine harvester 1 is set to the autonomous travel mode in advance.

### Step S1

In step S1, the vehicle control device 11 determines whether an autonomous travel start instruction has been acquired. When acquiring the autonomous travel start instruction from the operation terminal 30 (S1: Yes), the vehicle control device 11 proceeds to step S2. For example, when the combine harvester 1 satisfies the autonomous travel start condition and the operator presses the start button K1 (see FIG. 4) in the operation terminal 30, the vehicle control device 11 acquires the autonomous travel start instruction from the operation terminal 30. The vehicle control device 11 waits until the combine harvester 1 satisfies the autonomous travel start condition and acquires the autonomous travel start instruction from the operation terminals 30 (S1: No).

### Step S2

In step S2, the vehicle control device 11 starts the autonomous travel process. Specifically, the vehicle control device 11 causes the combine harvester 1 to start autonomous travel along the target route R corresponding to route data acquired from the operation terminal 30.

For example, as illustrated in FIG. 3, the vehicle control device 11 causes the combine harvester 1 to start autonomous travel along the target route R from the work start position S toward the work end position G. When starting the autonomous travel, the combine harvester 1 starts the reaping work on the work routes.

### Step S3

In step S3, the vehicle control device 11 determines whether the autonomous travel stop condition is satisfied. For example, the vehicle control device 11 determines that the autonomous travel stop condition is satisfied, when the operator sets the main shift lever 93 to the neutral position "N" while the combine harvester 1 is autonomously traveling, when the operator operates the temporary stop operation acceptor (operation lever, operation switch, operation button, or the like), when positioning accuracy of the combine harvester 1 becomes less than predetermined accuracy, when the combine harvester 1 detects an obstacle, when an operation of setting the reaping section 3 to the non-work position is received from the operator, when the operator has left the driver's seat 91, when the operator has performed a steering operation, when a failure has occurred in communication with the operation terminal 30, when the operator performs an emergency stop operation on the operation terminal 30, or when a failure of the combine harvester 1 (a failure of the main machine) has occurred. When it is determined that the autonomous travel stop condition is satisfied (S3: Yes), the vehicle control device 11 proceeds to step S4. On the other hand, when it is determined that the autonomous travel stop condition is not satisfied (S3: No), the vehicle control device 11 proceeds to step S10.

### Step S4

In step S4, the vehicle control device 11 stops the autonomous travel of the combine harvester 1 so as to stop the combine harvester 1. Note that the vehicle control device 11 stops the autonomous travel of the combine harvester 1 and gradually decelerates the combine harvester 1 from a current vehicle speed to stop the combine harvester 1.

### Step S5

In step S5, the vehicle control device 11 determines whether the autonomous travel maintaining condition is satisfied. For example, the vehicle control device 11 determines that the autonomous travel maintaining condition is satisfied when the autonomous travel is stopped by the operator setting the main shift lever 93 to the neutral position "N" (corresponding to the above-described "first example"). Furthermore, the vehicle control device 11 determines that the autonomous travel maintaining condition is satisfied when the autonomous travel is stopped by the operator performing a temporary stop operation with the operation lever or the operation switch mounted on the combine harvester 1 or the operation button arranged (displayed) on the operation terminal 30 (corresponding to the above-described "first example"). The vehicle control device 11 determines that the autonomous travel maintaining condition is satisfied when the autonomous travel is stopped because the positioning accuracy of the combine harvester 1 becomes less than the predetermined accuracy (corresponding to the above-described "second example"). The vehicle control device 11 determines that the autonomous travel maintaining condition is satisfied when the combine harvester 1 detects an obstacle and thus the autonomous travel is stopped (corresponding to the above-described "third example").

The vehicle control device 11 determines that the autonomous travel maintaining condition is satisfied when the autonomous travel of the combine harvester 1 is stopped and an operation of setting the reaping section 3 to the non-work position is received from the operator while the combine harvester 1 is stopped (corresponding to the above-described "fourth example"). The vehicle control device 11 determines that the autonomous travel maintaining condition is satisfied when the autonomous travel of the combine harvester 1 is stopped and the operator leaves the driver's seat 91 while the combine harvester 1 is stopped (corresponding to the above-described "fifth example"). The vehicle control device 11 determines that the autonomous travel maintaining condition is satisfied when the autonomous travel of the combine harvester 1 is stopped and a steering operation on the steering section (the steering wheel 92) is received from the operator while the combine harvester 1 is stopped (corresponding to the above-described "sixth example"). The vehicle control device 11 determines that the autonomous travel maintaining condition is satisfied when the autonomous travel of the combine harvester 1 is stopped and a communication failure occurs between the combine harvester 1 and the operation terminal 30 while the combine harvester 1 is stopped (corresponding to the above-described "seventh example").

On the other hand, the vehicle control device 11 determines that the autonomous travel stop condition is not satisfied, for example, when an operation of setting the reaping section 3 to the non-work position is received from the operator while the combine harvester 1 autonomously travels (corresponding to the above-described "fourth example"). The vehicle control device 11 determines that the autonomous travel stop condition is not satisfied when the operator leaves the driver's seat 91 while the combine harvester 1 autonomously travels (corresponding to the above-described "fifth example"). The vehicle control device 11 determines that the autonomous travel stop condition is not satisfied when the operator performs a steering operation while the combine harvester 1 autonomously travels (corresponding to the above-described "sixth example"). The vehicle control device 11 determines that the autonomous travel stop condition is not satisfied when a failure in communication with the operation terminal 30 occurs while the combine harvester 1 autonomously travels (corresponding to the above-described "seventh example"). The vehicle control device 11 determines that the autonomous travel stop condition is not satisfied when the operator performs an emergency stop operation on the operation terminal 30 or when a failure of the combine harvester 1 (malfunction of the main machine) occurs.

When it is determined that the autonomous travel maintaining condition is satisfied (S5: Yes), the vehicle control device 11 proceeds to step S51. When it is determined that the autonomous travel maintaining condition is not satisfied (S5: No), the vehicle control device 11 proceeds to step S6.

### Step S51

In step S51, the vehicle control device 11 maintains the autonomous travel mode and proceeds to step S8.

### Step S6

In step S6, the vehicle control device 11 switches the travel mode to the manual travel mode and proceeds to step S7.

### Step S7

In step S7, the vehicle control device 11 determines whether the combine harvester 1 satisfies the autonomous travel start condition.

Specifically, the vehicle control device 11 determines whether states of a position, orientation, a brake, a shift lever, a steering, and the like of the combine harvester 1 individually satisfy the autonomous travel start condition. When it is determined that the combine harvester 1 satisfies the autonomous travel start condition (S7: Yes), the vehicle control device 11 proceeds to step S8. The vehicle control device 11 waits until the combine harvester 1 satisfies the autonomous travel start condition (S7: No).

### Step S8

In step S8, the vehicle control device 11 determines whether an autonomous travel start instruction has been acquired. When acquiring the autonomous travel start instruction from the operation terminals 30 (S8: Yes), the vehicle control device 11 proceeds to step S9. The vehicle control device 11 waits until the autonomous travel start instruction is acquired (S8: No).

### Step S9

At step S9, the vehicle control device 11 resumes the autonomous travel of the combine harvester 1.

Thus, the combine harvester 1 resumes the autonomous travel along the target route R from the vehicle stop position and resumes the reaping work on the work routes. When the positioning accuracy has not returned to the predetermined accuracy or more at the time of resuming the autonomous travel, the vehicle control device 11 may notify the operator of a warning.

### Step S10

In step S10, the vehicle control device 11 determines whether the work has ended. To be specific, when the combine harvester 1 reaches the work end position G, the vehicle control device 11 determines that the work has ended (S10: Yes), and ends the autonomous travel process. When the combine harvester 1 has not reached the work end position G (S10: No), the vehicle control device 11 proceeds to step S3, and the above-described processing is executed. The vehicle control device 11 repeatedly executes the above-described processing until the combine harvester 1 finishes the work.

As described above, the vehicle control device 11 sets the travel mode of the combine harvester 1 to the autonomous travel mode or the manual travel mode, and maintains the autonomous travel mode when the combine harvester 1 set in the autonomous travel mode satisfies the autonomous travel maintaining condition. Furthermore, when the combine harvester 1 set in the autonomous travel mode does not satisfy the autonomous travel maintaining condition, the vehicle control device 11 switches the travel mode to the manual travel mode. The vehicle control device 11 stops the autonomous travel when the combine harvester 1 autonomously traveling in the autonomous travel mode satisfies the autonomous travel stop condition, and permits resumption of the autonomous travel when the combine harvester 1 satisfies the autonomous travel maintaining condition.

With the above configuration, for example, even when the operator performs an operation to stop the autonomous travel, the autonomous travel mode can be maintained, and thus the operator can resume the autonomous travel without performing a predetermined operation (for example, manual steering) to satisfy the autonomous travel start condition when resuming the autonomous travel. Thus, the operability of the user operation on the autonomously traveling combine harvester 1 can be improved.

### Other Embodiments

The present invention is not limited to the above embodiment. Other embodiments of the present invention will be described below.

Although the combine harvester 1 has been described as an example in the above-described embodiment, a configuration of each of the above-described examples can also be applied to other work vehicles. For example, the work vehicle of the present invention may be a tractor or a rice transplanter. Examples in a tractor and a rice transplanter will be described below. The tractor and the rice transplanter include the vehicle control device 11 (the travel processing section 111 and the setting processing section 112), as in the combine harvester 1.

### Tractor

The tractor includes a main shift lever that can perform an operation of accelerating or decelerating a vehicle speed, and a switching lever (reverser) that switches a traveling direction (forward or backward). The setting processing section 112 maintains the autonomous travel mode when the autonomous travel of the tractor is stopped by an operation of the main shift lever or the reverser. The main shift lever and the reverser of the tractor are examples of the operation acceptor of the present invention.

For example, when the operator sets the main shift lever to a lowest speed position (for example, a position of a vehicle speed "0") while the tractor autonomously travels in the autonomous travel mode, the travel processing section 111 decelerates and stops the tractor. When the main shift lever is set to the lowest speed position and the tractor is brought into a stopped state, the setting processing section 112 determines that the autonomous travel maintaining condition is satisfied and maintains the autonomous travel mode. Therefore, for example, even when the operator gets out of the tractor after the tractor is stopped (or when a predetermined period of time has elapsed after the operator leaves the driver's seat), the setting processing section 112 maintains the autonomous travel mode without canceling the autonomous travel mode due to the operator leaving the driver's seat.

For example, when the operator sets the reverser to the neutral position "N" while the tractor autonomously travels in the autonomous travel mode, the travel processing section 111 decelerates and stops the tractor. When the reverser is set to the neutral position "N" and the tractor is brought into a stopped state, the setting processing section 112 determines that the autonomous travel maintaining condition is satisfied and maintains the autonomous travel mode.

As another embodiment, the setting processing section 112 may be configured to determine that the autonomous travel maintaining condition is satisfied and maintain the autonomous travel mode when the autonomous travel of the tractor is stopped by an operation of the main shift lever or the reverser and a parking brake lever is set to a braking position.

### Rice Transplanter

The rice transplanter includes a pedal (a stepping pedal or a speed change pedal) that can be operated to start, stop, and accelerate or decelerate a vehicle speed, and a switching lever (a reverser) that switches a traveling direction (forward or backward). The setting processing section 112 maintains the autonomous travel mode when the autonomous travel of the rice transplanter is stopped by an operation of the pedal or the reverser. The pedal and the reverser of the rice transplanter are an example of an operation acceptor of the present invention.

For example, when the operator sets the pedal to "0" (vehicle speed "0"), that is, releases the foot from the pedal while the rice transplanter autonomously travels in the autonomous travel mode, the travel processing section 111 decelerates and stops the rice transplanter. When the rice transplanter is changed to the vehicle stop state by releasing a foot from the pedal, the setting processing section 112 determines that the autonomous travel maintaining condition is satisfied and maintains the autonomous travel mode. Therefore, for example, even when the operator gets out of the rice transplanter (or when a predetermined period of time has elapsed after the operator leaves the driver's seat) after the rice transplanter is stopped, the setting processing section 112 does not cancel the autonomous travel mode due to the operator leaving the driver's seat and maintains the autonomous travel mode.

For example, when the operator sets the reverser to the neutral position "N" while the rice transplanter autonomously travels in the autonomous travel mode, the travel processing section 111 determines that the autonomous travel maintaining condition is satisfied and maintains the autonomous travel mode, similarly to the tractor.

The rice transplanter may have a vehicle speed maintenance control (automatic cruise control) function. For example, the rice transplanter includes an automatic cruise lever (vehicle speed maintenance operation acceptor). The automatic cruise control causes the rice transplanter to travel at a predetermined vehicle speed even when a foot is released from the speed change pedal. The automatic cruise control is started by operating the automatic cruise lever while the rice transplanter is traveling. The automatic cruise lever can be operated to an ON-side and an OFF-side.

The vehicle speed during the automatic cruise control is set based on an operation position of the speed change pedal at a time when the automatic cruise lever is operated to the ON-side. The automatic cruise control can be ended by operating the automatic cruise lever to the OFF-side. The automatic cruise control is automatically ended by stepping on the speed change pedal. Note that, when the automatic cruise lever is operated to the OFF-side and the speed change pedal is operated, the rice transplanter continues the autonomous travel at the vehicle speed corresponding to an operation position of the speed change pedal, and when the automatic cruise lever is operated to the OFF-side and the speed change pedal is not operated, the rice transplanter gradually decelerates the vehicle speed and stops the autonomous travel (vehicle stop) when the vehicle speed becomes 0.

In the rice transplanter having the vehicle speed maintenance control (automatic cruise control) function, for example, when the vehicle control function is canceled (when the automatic cruise lever is operated to the OFF-side) while the rice transplanter autonomously travels in the autonomous travel mode, the travel processing section 111 decelerates and stops the rice transplanter when the speed change pedal is not operated. When the rice transplanter is changed to the vehicle stop state by releasing the vehicle speed maintenance control function (OFF operation of the automatic cruise lever), the setting processing section 112 determines that the autonomous travel maintaining condition is satisfied and maintains the autonomous travel mode. The automatic cruise lever of the rice transplanter is an example of the operation acceptor of the present invention.

### Appendices

A summary of the invention extracted from the above-described embodiments will be described below as appendices. Note that components and processing functions described in the following appendices can be arbitrary selected and combined.

### Appendix 1

An autonomous travel method for causing a work vehicle to autonomously travel along a target route, comprising:
setting a travel mode of the work vehicle to an autonomous travel mode or a manual travel mode; and
maintaining the autonomous travel mode when the work vehicle set in the autonomous travel mode satisfies an autonomous travel maintaining condition.

### Appendix 2

The autonomous travel method according to Appendix 1, wherein
when the work vehicle set in the autonomous travel mode does not satisfy the autonomous travel maintaining condition, the work vehicle is switched to the manual travel mode.

### Appendix 3

The autonomous travel method according to Appendix 1 or 2, wherein
the autonomous travel is stopped when the work vehicle autonomously traveling in the autonomous travel mode satisfies an autonomous travel stop condition, and
resumption of the autonomous travel is permitted when the work vehicle satisfies the autonomous travel maintaining condition.

### Appendix 4

The autonomous travel method according to any one of Appendices 1 to 3, wherein
the work vehicle maintains the autonomous travel mode when the autonomous travel is stopped by an operation of an operation acceptor that temporarily stops the autonomous travel.

### Appendix 5

The autonomous travel method according to any one of Appendices 1 to 3, wherein
the work vehicle maintains the autonomous travel mode when the autonomous travel is stopped due to positioning accuracy becoming less than predetermined accuracy.

### Appendix 6

The autonomous travel method according to any one of Appendices 1 to 3, wherein
the work vehicle maintains the autonomous travel mode when the autonomous travel is stopped due to detection of an obstacle.

### Appendix 7

The autonomous travel method according to any one of Appendices 1 to 3, wherein
the work vehicle switches to the manual travel mode when an operation of setting a work machine to a non-work position is received while the work vehicle autonomously travels in the autonomous travel mode, and
the work vehicle maintains the autonomous travel mode when the work vehicle receives an operation to set the work machine to the non-work position while the work vehicle is stopped in the autonomous travel mode.

### Appendix 8

The autonomous travel method according to any one of Appendices 1 to 3, wherein
the work vehicle is switched to the manual travel mode when an operator leaves a driver's seat while the work vehicle autonomously travels in the autonomous travel mode, and
the work vehicle maintains the autonomous travel mode when the operator leaves the driver's seat while the work vehicle is stopped in the autonomous travel mode.

### Appendix 9

The autonomous travel method according to any one of Appendices 1 to 3, wherein
the work vehicle switches to the manual travel mode when a steering operation on a steering section is received while the work vehicle autonomously travels in the autonomous travel mode, and
the work vehicle maintains the autonomous travel mode when the steering operation on the steering section is received while the work vehicle is stopped in the autonomous travel mode.

### Appendix 10

The autonomous travel method according to any one of Appendices 1 to 3, wherein
the work vehicle switches to the manual travel mode when a communication state between the work vehicle and an operation terminal is deteriorated to a predetermined state while the work vehicle autonomously travels in the autonomous travel mode, and
the work vehicle maintains the autonomous travel mode when the communication state between the work vehicle and the operation terminal is deteriorated to the predetermined state while the work vehicle is stopped in the autonomous travel mode.

### Appendix 11

The autonomous travel method according to any one of Appendices 1 to 10, wherein, in a case where the work vehicle that has stopped the autonomous travel satisfies the autonomous travel maintaining condition,
resumption of the autonomous travel is permitted when positioning accuracy of the work vehicle is equal to or more than predetermined accuracy, and
a notification of warning information is made for an operator when the positioning accuracy of the work vehicle is less than the predetermined accuracy.

### REFERENCE SIGNS LIST

1 Combine harvester (Work vehicle)
3 Reaping section (Work machine)
9 Steering section
10 Autonomous travel system
11 Vehicle control device
30 Operation terminal
31 Operation controller
91 Driver's seat
92 Steering wheel (Steering section)
93 Main shift lever (Operation acceptor)
94 Seat detector
111 Travel processing section
112 Setting processing section
311 Setting processing section
312 Output processor
D1 operation screen
F Field
R Target route
S Work start position
G Work end position

## Claims

1. An autonomous travel method for causing a work vehicle to autonomously travel along a target route, comprising:
setting a travel mode of the work vehicle to an autonomous travel mode or a manual travel mode; and
maintaining the autonomous travel mode when the work vehicle set in the autonomous travel mode satisfies an autonomous travel maintaining condition.

2. The autonomous travel method according to claim 1, wherein
when the work vehicle set in the autonomous travel mode does not satisfy the autonomous travel maintaining condition, the work vehicle is switched to the manual travel mode.

3. The autonomous travel method according to claim 1, wherein
the autonomous travel is stopped when the work vehicle autonomously traveling in the autonomous travel mode satisfies an autonomous travel stop condition, and
resumption of the autonomous travel is permitted when the work vehicle satisfies the autonomous travel maintaining condition.

4. The autonomous travel method according to any one of claims 1 to 3, wherein
the work vehicle maintains the autonomous travel mode when the autonomous travel is stopped by an operation of an operation acceptor that temporarily stops the autonomous travel.

5. The autonomous travel method according to any one of claims 1 to 3, wherein
the work vehicle maintains the autonomous travel mode when the autonomous travel is stopped due to positioning accuracy becoming less than predetermined accuracy.

6. The autonomous travel method according to any one of claims 1 to 3, wherein
the work vehicle maintains the autonomous travel mode when the autonomous travel is stopped due to detection of an obstacle.

7. The autonomous travel method according to any one of claims 1 to 3, wherein
the work vehicle switches to the manual travel mode when an operation of setting a work machine to a non-work position is received while the work vehicle autonomously travels in the autonomous travel mode, and
the work vehicle maintains the autonomous travel mode when the work vehicle receives an operation to set the work machine to the non-work position while the work vehicle is stopped in the autonomous travel mode.

8. The autonomous travel method according to any one of claims 1 to 3, wherein
the work vehicle is switched to the manual travel mode when an operator leaves a driver's seat while the work vehicle autonomously travels in the autonomous travel mode, and
the work vehicle maintains the autonomous travel mode when the operator leaves the driver's seat while the work vehicle is stopped in the autonomous travel mode.

9. The autonomous travel method according to any one of claims 1 to 3, wherein
the work vehicle switches to the manual travel mode when a steering operation on a steering section is received while the work vehicle autonomously travels in the autonomous travel mode, and
the work vehicle maintains the autonomous travel mode when the steering operation on the steering section is received while the work vehicle is stopped in the autonomous travel mode.

10. The autonomous travel method according to any one of claims 1 to 3, wherein
the work vehicle switches to the manual travel mode when a communication state between the work vehicle and an operation terminal is deteriorated to a predetermined state while the work vehicle autonomously travels in the autonomous travel mode, and
the work vehicle maintains the autonomous travel mode when the communication state between the work vehicle and the operation terminal is deteriorated to the predetermined state while the work vehicle is stopped in the autonomous travel mode.

11. The autonomous travel method according to any one of claims 1 to 3, wherein, in a case where the work vehicle that has stopped the autonomous travel satisfies the autonomous travel maintaining condition,
resumption of the autonomous travel is permitted when positioning accuracy of the work vehicle is equal to or more than predetermined accuracy, and
a notification of warning information is made for an operator when the positioning accuracy of the work vehicle is less than the predetermined accuracy.

12. An autonomous travel program for causing a work vehicle to autonomously travel along a target route, the program causing one or more processors to:
set a travel mode of the work vehicle to an autonomous travel mode or a manual travel mode; and
maintain the autonomous travel mode when the work vehicle set in the autonomous travel mode satisfies an autonomous travel maintaining condition.

13. An autonomous travel system that causes a work vehicle to autonomously travel along a target route, comprising:
a setting processing section
setting a travel mode of the work vehicle to an autonomous travel mode or a manual travel mode, and
maintaining the autonomous travel mode when the work vehicle set in the autonomous travel mode satisfies an autonomous travel maintaining condition.
